# EUROPEAN PATENT APPLICATION

(11) **EP 4 614 602 A1**
(43) Date of publication of application: **10.09.2025**
(21) Application number: 23885657.9
(22) Date of filing: 26.10.2023
(51) Int. Cl.: H01M 4/38, B22F 1/00, B22F 1/052, B22F 5/00, B22F 9/08, C01B 33/06, H01M 4/134, H01M 4/36, H01M 4/62

(54) **NEGATIVE ELECTRODE MATERIAL POWDER FOR LITHIUM-ION BATTERY**

(30) Priority: 31.10.2022 JP 2022174683
(71) Applicant: Daido Steel Co., Ltd., Nagoya-shi Aichi 461-8581 (JP)
(72) Inventor: MINAMI, Kazuki, Nagoya-shi, Aichi 457-8712 (JP); SHIMOMURA, Kyohei, Nagoya-shi, Aichi 457-8545 (JP); KIMURA, Yuta, Nagoya-shi, Aichi 457-8545 (JP)
(74) Representative: Diehl & Partner
(86) International application number: PCT/JP2023/038798
(87) International publication number: WO 2024/095901

(57) **Abstract**

The present invention relates to a negative electrode material powder for a lithium-ion battery, the negative electrode material powder comprising a Si-containing granulated body that includes a Si phase, a Si compound phase, and a Sn compound phase, of which the primary particles are aggregated, and arbitrarily and selectively contains a binder within the range of 0-2.0 mass%. The average grain diameter (d50) of the primary particles forming the Si-containing granulated body is within the range of 0.1-10.0 µm. The average grain diameter (d50) of the primary particles is less than 1/3 of, and greater than 1/200 of, the average grain diameter (d50) of the Si-containing granulated body.

## Description

### TECHNICAL FIELD

This invention relates to a negative electrode material powder for lithium ion battery.

### BACKGROUND ART

A lithium ion battery has an advantage of being able to miniaturize with a high capacity and a high voltage, and has been widely used as a power supply for mobile phones and laptops. In recent years, it has attracted much expectations as a power supply for power applications such as electric vehicles and hybrid vehicles, and the development thereof has been actively promoted.

In the lithium ion battery, lithium ions (hereinafter may be referred to as "Li ions") move between a positive electrode and a negative electrode for charging and discharging. On a negative electrode side, Li is occluded in a negative electrode active material during charging, and Li is released as an ion from the negative electrode active material during discharging.

In the related art, lithium cobaltate (LiCoO₂) is generally used as an active material on a positive electrode side, and graphite is widely used as the negative electrode active material. However, graphite as the negative electrode active material has a theoretical capacity of only 372 mAh/g, and an increased capacity has been desired.

As an alternative to a carbon-based electrode material such as the above graphite, a metal material such as Si (the theoretical capacity of Si is 4198 mAh/g) that can be expected to have an increased capacity has been studied (see, for example, Patent Literature 1).

### CITATION LIST

### PATENT LITERATURE

Patent Literature 1: JP2020-126835A

### SUMMARY OF INVENTION

### TECHNICAL PROBLEM

Si has large volume expansion and contraction along with occlusion and release of Li due to occlusion of Li by an alloying reaction with Li. Therefore, when Si is used as the negative electrode active material, Si particles crack or peel off from a current collector due to charging and discharging, deteriorating cycle characteristics, which are capacity retention characteristics when charging and discharging are repeated.

As a solution to solve such deterioration of the cycle characteristics, it is conceivable to use a Si-containing granulated body obtained by granulating nanoparticles including a Si phase as the negative electrode material powder.

However, in order to form such a granulated body, a binder (binding agent) for binding particles is required, and the binder does not involve in charging and discharging of Li, and thus a charge and discharge capacity decreases. Therefore, there is still room for improvement in improving battery characteristics in consideration of initial characteristics and cycle characteristics of the battery such as an initial discharge capacity and initial Coulombic efficiency.

The present invention has been made in view of the above circumstances, and an object thereof is to provide a negative electrode material powder for lithium ion battery in which an amount of a binder can be included in a Si-containing granulated body and that can improve battery characteristics in consideration of initial characteristics and cycle characteristics.

### SOLUTION TO PROBLEM

As a result of intensive studies to solve the above problems, the inventors of the present application have found that the amount of the binder included in the Si-containing granulated body can be reduced by defining an average particle diameter of primary particles constituting the Si-containing granulated body. The present invention has been made based on such finding.

A negative electrode material powder for lithium ion battery, including:
a Si phase;
a Si compound phase; and
a Sn compound phase,
in which the negative electrode material powder includes a Si-containing granulated body,
the Si-containing granulated body is formed by aggregating primary particles of the Si phase, the Si compound phase, and the Sn compound phase, and optionally includes a binder in a range of 0 mass% to 2.0 mass%,
the primary particles constituting the Si-containing granulated body have an average particle diameter (d50) in a range of 0.1 µm to 10.0 µm,
the average particle diameter (d50) of the primary particles is smaller than 1/3 of an average particle diameter (d50) of the Si-containing granulated body, and
the average particle diameter (d50) of the primary particles is larger than 1/200 of the average particle diameter (d50) of the Si-containing granulated body.

In the negative electrode material powder for lithium ion battery defined in this manner, a space for allowing expansion of the Si phase is likely to be formed around the primary particles of the Si phase that expands due to occlusion of Li. This space serves as a buffer region for the expansion of the Si phase, collapse of the Si-containing granulated body can be prevented, and the cycle characteristics can be improved.

In order to form the Si-containing granulated body, a binder for binding particles is required. According to the investigation by the inventors of the present application, when the average particle diameter (d50) of the primary particles constituting the Si-containing granulated body is in the range of 0.1 µm to 10.0 µm, the average particle diameter (d50) of the primary particles is smaller than 1/3 of the average particle diameter (d50) of the Si-containing granulated body, and is larger than 1/200 of the average particle diameter (d50) of the Si-containing granulated body, a decrease in cycle characteristics is prevented even when the amount of the binder included in the Si-containing granulated body is reduced to 0 mass% to 2.0 mass%. As a result, it is possible to improve the battery characteristics in consideration of the initial characteristics and the cycle characteristics.

Here, the Si compound phase may be a SiX compound phase including Si and an element X, and the Sn compound phase may be a SnY compound phase including Sn and an element Y. Here, the element X is at least one element selected from the group consisting of Fe, Ni, Cr, Zr, and Ti, and the element Y is at least one element selected from the group consisting of Cu, Fe, Ni, Cr, Co, Mn, Zr, and Ti.

When content proportions of the Si phase, the SiX compound phase, and the SnY compound phase are represented by the following formula (1), the negative electrode material powder for lithium ion battery may be configured to satisfy a+b+c = 100, 9.9 ≤ a ≤ 95, 1 ≤ b ≤ 90, and 0.1 ≤ c ≤ 50.

a[Si]-b[SiX]-c[SnY] formula (1)

In the formula (1), a, b, and c respectively represent a content proportion (mass%) of the Si phase, the SiX compound phase, and the SnY compound phase.

In this case, in consideration of a balance between the initial characteristics and the cycle characteristics, a, b, and c in the formula (1) may be set to satisfy 29.9 ≤ a ≤ 90, 1 ≤ b ≤ 70, and 0.1 ≤ c ≤ 30, respectively.

In addition, from the viewpoint of improving the cycle characteristics, Cu may be used as the element Y. In this case, the average particle diameter (d50) of the primary particles may be in a range of 0.2 µm to 5.0 µm.

### BRIEF DESCRIPTION OF DRAWINGS

[FIG. 1] FIG. 1 is a schematic view of a negative electrode material powder according to an embodiment of the present invention.
[FIG. 2] FIG. 2 is an electron micrograph of the negative electrode material powder according to the embodiment.
[FIG. 3] (A) of FIG. 3 to (D) of FIG. 3 are diagrams illustrating a method for producing the negative electrode material powder according to the embodiment.

### DESCRIPTION OF EMBODIMENTS

Next, a negative electrode material powder for lithium ion battery according to an embodiment of the present invention and a lithium ion battery using the present negative electrode material powder as a negative electrode (hereinafter may be simply referred to as a "battery") are specifically described.

### 1. Negative Electrode Material Powder

The present negative electrode material powder includes a Si phase, a Si compound phase, and a Sn compound phase as an inorganic component. The present negative electrode material powder includes Si and Sn as main constituent elements of the inorganic component.

The Si compound phase is preferably a SiX compound phase including Si and an element X, and the Sn compound phase is preferably a SnY compound phase including Sn and an element Y. In this case, the main constituent elements of the inorganic component in the present negative electrode material powder are Si, Sn, the element X, and the element Y. Here, the element X is at least one element selected from the group consisting of Fe, Ni, Cr, Zr, and Ti. The element Y is at least one element selected from the group consisting of Cu, Fe, Ni, Cr, Co, Mn, Zr, and Ti.

As the inorganic component, elements other than these main constituent elements (Si, Sn, the element X, and the element Y) are not included except for inevitable ones. Examples of elements for inevitable impurities include nitrogen (N), sulfur (S), and phosphorus (P). As an upper limit of each of the inevitable impurity elements in the present negative electrode material powder, N ≤ 0.10 mass%, S ≤ 0.10 mass%, and P ≤ 0.10 mass%.

The present negative electrode material powder preferably includes, as a metal structure, the Si phase, the SiX compound phase, and the SnY compound phase in phase proportions represented by the following formula (1).

a[Si]-b[SiX]-c[SnY] formula (1)

In the formula (1), a, b, and c (a+b+c = 100) represent the content (mass%) of the Si phase, the SiX compound phase, and the SnY compound phase, respectively. In this example, 9.9 ≤ a ≤ 95, 1 ≤ b ≤ 90, and 0.1 ≤ c ≤ 50 are preferably satisfied.

Note that, a non-compound Sn (Sn phase) may be included as an impurity as long as its proportion is 5 mass% or less in the entire powder.

The Si phase is a phase mainly including Si. Here, "the phase mainly including Si" means that the content proportion of Si in the Si phase is 99 mass% or more. From the viewpoint that a Li occlusion amount increases, the Si phase is preferably a single phase of Si. However, the Si phase may include inevitable impurities.

In the present negative electrode material powder, the proportion of the Si phase (the value of "a" in the formula (1)) is preferably 9.9 mass% to 95 mass%. A more preferred proportion of the Si phase is 29.9 mass% to 90 mass%. Here, the proportion of the Si phase occluding Li ions is preferably 9.9 mass% or more, more preferably 10 mass% or more, still more preferably 29.9 mass% or more, and even more preferably 30 mass% or more, from the viewpoint of obtaining a good initial discharge capacity. In addition, the proportion thereof is preferably 95 mass% or less, and more preferably 90 mass% or less, from the viewpoint of preventing deterioration of the cycle characteristics due to a relative decrease in the proportion of the SiX compound phase.

On the other hand, a SiX compound constituting the SiX compound phase has a poor Li occlusion property and has very little expansion due to a reaction with Li ions. Therefore, the SiX compound phase plays the role of a skeleton that maintains an electrode structure.

The SiX compound may have different characteristics such as a Li storage property and conductivity depending on which element is selected as the element X. Fe, Ni, Cr, and Zr as the element X are particularly excellent in low expansion property and high conductivity expected of the SiX compound. In addition, the element X effective in improving initial Coulombic efficiency is Ni and Ti. The element X effective in improving discharge rate characteristics is Ti.

Note that, the SiX compound phase can include only one type of compound, and can also include two or more types of compounds, such as a SiFe compound and a SiNi compound.

On the other hand, a SnY compound constituting the SnY compound phase has a theoretical capacity lower than that of Si and higher than that of the SiX compound. For example, a SiZr compound (SiX compound) has a theoretical capacity of 100 mAh/g, while the SnY compound has a theoretical capacity of 150 mAh/g to 600 mAh/g.

In this example, a diffusion path for Li ions is easily ensured through the SnY compound phase. On the other hand, since a degree of expansion of the SnY compound due to the reaction with Li ions is smaller than that of Si or Sn alone, which has high reactivity with Li ions, an adverse influence on the cycle characteristics due to formation of the SnY compound can be reduced.

In particular, a SnCu compound formed in the case where Cu is selected as the element Y has excellent conductivity. It is also effective in improving the cycle characteristics. Note that, this SnY compound phase may also include only one type of compound, or may include two or more types of compounds.

As described above, the SiX compound phase and the SnY compound phase play different roles, and the battery characteristics obtained also change depending on the proportions of these compound phases. The SnY compound phase expands more than the SiX compound phase due to the reaction with Li ions, although the degree of expansion is not so large. Therefore, when the proportion of the SnY compound phase is high and the proportion of the SiX compound phase is low, the cycle characteristics decrease. On the other hand, when the proportion of the SiX compound phase is high and the proportion of the SnY compound phase is low, the initial discharge capacity is low.

In this example, the proportion of the SiX compound phase (the value of "b" in the formula (1)) is preferably 1 mass% to 90 mass%, and the proportion of the SnY compound phase (the value of "c" in the formula (1)) is preferably 0.1 mass% to 50 mass%. More preferably, the proportion of the SiX compound phase is 1 mass% to 70 mass%, and the proportion of the SnY compound phase is 0.1 mass% to 30 mass%.

That is, a combination of a, b, and c in the formula (1) preferably satisfies, for example, 9.9 ≤ a ≤ 95, 1 ≤ b ≤ 90, and 0.1 ≤ c ≤ 50, and more preferably satisfies 29.9 ≤ a ≤ 90, 1 ≤ b ≤ 70, and 0.1 ≤ c ≤ 30.

The content of each main element suitable for obtaining the above composition phase in the inorganic component is as follows. Note that, in the following description, "%" means "mass%" unless otherwise specified.

Si is preferably included in a range of 50% to 95%. A more preferred range is 60% to 80%. A still more preferred range is 73% to 79%. Here, the content of Si is preferably 50% or more, more preferably 60% or more, and still more preferably 73% or more, from the viewpoint of obtaining a good initial discharge capacity. In addition, the content of Si is preferably 95% or less, more preferably 80% or less, and still more preferably 79% or less, from the viewpoint of maintaining good cycle characteristics.

The element X is preferably included in a range of 1.0% to 38%. A more preferred range is 5.0% to 30%. A still more preferred range is 13% to 23%. Here, the content of the element X is preferably 1.0% or more, more preferably 5.0% or more, and still more preferably 13% or more, from the viewpoint of obtaining good cycle characteristics. In addition, the content of the element X is preferably 38% or less, more preferably 30% or less, and still more preferably 23% or less, from the viewpoint of preventing a decrease in initial discharge capacity.

Sn is preferably included in a range of 0.7% to 30%. A more preferred range is 1.0% to 10%. A still more preferred range is 1.5% to 5.0%. Here, the content of Sn is preferably 0.7% or more, more preferably 1.0% or more, and still more preferably 1.5% or more, from the viewpoint of suitably obtaining the effect as a Li diffusion path. In addition, the content of Sn is preferably 30% or less, more preferably 10% or less, and still more preferably 5.0% or less, from the viewpoint of preventing a decrease in cycle characteristics due to excessive expansion caused by the SnY compound.

The element Y is preferably included in a range of 1.0% to 15%. A more preferred range is 1.5% to 10%. A still more preferred range is 1.5% to 4.0%. Here, the content of the element Y is preferably 1.0% or more, and more preferably 1.5% or more, from the viewpoint of suitably obtaining the effect as a Li diffusion path. In addition, the content of the element Y is preferably 15% or less, more preferably 10% or less, and still more preferably 4.0% or less, from the viewpoint of preventing a decrease in cycle characteristics due to excessive expansion caused by the SnY compound.

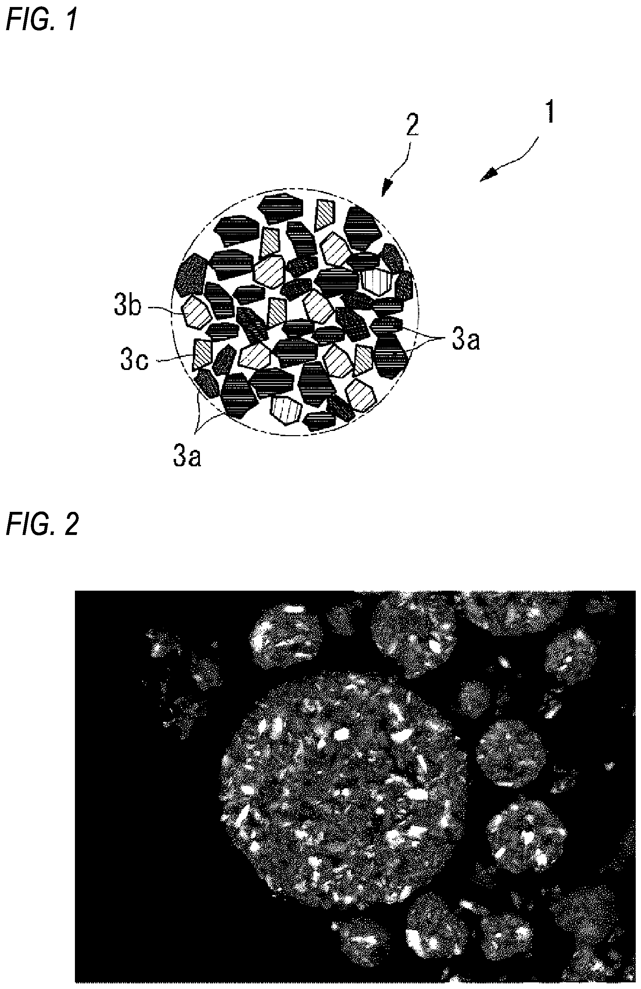

FIG. 1 is a schematic view of the negative electrode material powder in this example. FIG. 2 is an electron micrograph of the negative electrode material powder.

In FIG. 1, 1 denotes a negative electrode material powder, and 2 denotes a Si-containing granulated body formed by aggregating a plurality of primary particles 3. The primary particles 3 in this example indicates that the Si phase, the Si compound phase, and the Sn compound phase are respectively separated into particles (primary particles) by pulverization. Here, the Si compound phase is preferably a SiX compound phase, and the Sn compound phase is preferably a SnY compound phase. As the primary particles 3, more preferably, the Si phase, the Si compound phase, and the Sn compound phase are respectively separated into particles by pulverization, and still more preferably, the Si phase, the SiX compound phase, and the SnY compound phase are respectively separated into particles by pulverization.

The Si-containing granulated body 2 is formed by aggregating Si particles, Si compound particles, and Sn compound particles as primary particles, the Si compound particles are preferably SiX compound particles 3b, and the Sn compound particles are preferably SnY compound particles 3c. The Si-containing granulated body 2 is more preferably formed by aggregating Si particles 3a, the SiX compound particles 3b, and the SnY compound particles 3c.

In the Si-containing granulated body shown in FIG. 2, dark portions close to black correspond to the Si particles 3a, gray portions correspond to the SiX compound particles 3b, and white portions correspond to the SnY compound particles 3c, respectively.

The primary particles 3 has an average particle diameter (median diameter d50) in a range of 0.1 µm to 10.0 µm. Since the primary particles undergo volume expansion and contraction due to occlusion and release of Li, in the case where the particle diameter is large, the volume change is large, and the collapse of the electrode is likely to proceed. Therefore, in this example, an upper limit of the average particle diameter (d50) is defined as 10.0 µm. On the other hand, in the case where the particle diameter is excessively small, a decrease in initial Coulombic efficiency due to an increase in specific surface area, and a decrease in charge and discharge capacity due to an increase in amount of the binder for maintaining the shape of the granulated body occur. Therefore, in this example, a lower limit of the average particle diameter (d50) is defined as 0.1 µm. The average particle diameter (median diameter d50) of the primary particles 3 is in a range of more preferably 0.2 µm to 5.0 µm, and still more preferably 0.2 µm to 3.0 µm. The average particle diameter of the primary particles 3 may be any value as long as the average particle diameter of overall the primary particles constituting the Si-containing granulated body 2 is within the above range, but it is preferable that the average particle diameter of each of the primary particles of the Si particles, the Si compound particles, and the Sn compound particles is within the above range.

Note that, the average particle diameter (d50) in the present description is a volume-based median diameter.

On the other hand, the Si-containing granulated body 2 formed by aggregating a plurality of primary particles 3 has an average particle diameter (d50) in a range of preferably 3 µm to 1000 µm, and more preferably 10 µm to 100 µm. Here, the average particle diameter thereof is preferably 1000 µm or less, and more preferably 100 µm or less, from the viewpoint of uniform application of a paste-like electrode material to a substrate. In addition, the average particle diameter is preferably 3 µm or more, and more preferably 10 µm or more, from the viewpoint of handleability.

In this example, the average particle diameter (d50) of the primary particles 3 constituting the Si-containing granulated body 2 is defined to be smaller than 1/3 of the average particle diameter (d50) of the Si-containing granulated body 2. Accordingly, it is possible to obtain the Si-containing granulated body 2 in which a binder for binding the primary particles to each other is an optional component, and it is possible to improve the initial Coulombic efficiency and increase the initial discharge capacity while preventing a decrease in cycle characteristics. The average particle diameter of the primary particles 3 is sufficiently smaller than 1/3 of the average particle diameter of the Si-containing granulated body 2, and is preferably 1/5 or less, and more preferably 1/10 or less.

Here, it is possible to further include a binder in the Si-containing granulated body 2 for the purpose of further improving the cycle characteristics. Even in this case, since it is possible to make the amount of the binder smaller than the amount of the binder in the related art, that is, 2.0 mass% or less with respect to a total mass of the Si-containing granulated body, it is possible to prevent a decrease in charge and discharge capacity due to the addition of the binder.

On the other hand, when the particle diameter of the granulated powder (Si-containing granulated body) is relatively too large, the granulated powder may aggregate in the slurry. Therefore, in this example, the average particle diameter (d50) of the primary particles 3 is defined to be larger than 1/200 of the average particle diameter (d50) of the Si-containing granulated body 2, in other words, the average particle diameter (d50) of the Si-containing granulated body 2 is defined to be smaller than 200 times the average particle diameter (d50) of the primary particles 3. The average particle diameter of the primary particles 3 is sufficiently larger than 1/200 of the average particle diameter of the Si-containing granulated body 2, and is preferably 1/100 or more, and more preferably 1/50 or more.

Next, a method for producing the present negative electrode material powder is described.

Respective raw materials are weighed out such that a predetermined chemical composition is obtained, and a molten alloy obtained by melting the weighed raw materials by using a melting device such as an arc furnace, a high frequency induction furnace, or a heating furnace is quenched by using an atomization method, to thereby obtain a Si alloy as a quenched alloy.

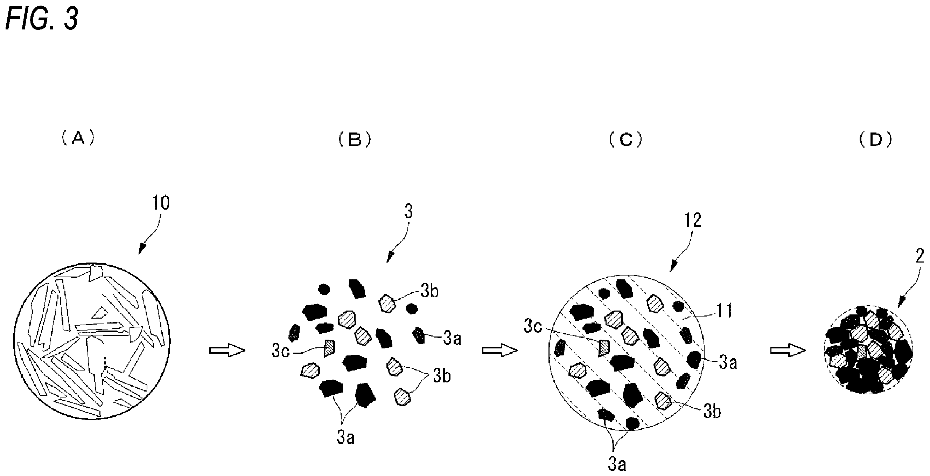

In the atomization method, a gas such as N₂, Ar, or He is sprayed at a high pressure (for example, 1 MPa to 10 MPa) against the molten alloy that is discharged into an atomization chamber and that continuously (rod-like) flows downward, and the molten alloy is pulverized and cooled. The cooled molten alloy approaches a spherical shape while free-falling in the atomization chamber in a semi-molten state, and for example, Si alloy particles 10 as shown in (A) of FIG. 3 are obtained. The Si phase, the SiX compound phase, and the SnY compound phase are formed in the structure of the Si alloy particles 10 illustrated in (A) of FIG. 3, and the present invention is not limited thereto. It is sufficient that the Si phase, the Si compound phase, and the Sn compound phase are formed.

Note that, in the atomization method, high-pressure water may be sprayed instead of the gas from the viewpoint of improving a cooling effect. In some cases, it is also possible to obtain a foiled Si alloy by using a roll quenching method instead of the atomization method.

Next, the obtained Si alloy particles are finely pulverized in a wet process, and as illustrated in (B) of FIG. 3, the Si particles 3a, the SiX compound particles 3b, and the SnY compound particles 3c as the primary particles 3 which are independently present are obtained.

As the wet pulverization method in this example, a wet pulverization method using a bead mill or the like can be used. In wet pulverization, a solvent is used together with the Si alloy particles to be pulverized. As the solvent, ethanol, methanol, isopropyl alcohol, Naphthesol, and the like can be used.

When there is a large difference in amounts (proportions) of the Si phase, the SiX compound phase, and the SnY compound phase in the Si alloy particles 10 to be pulverized, pulverization of a phase with a large amount does not proceed, and a difference in particle diameter for each phase easily occurs. However, in the case of the Si alloy particles in which the chemical composition is adjusted such that Si, the SiX compound, and the SnY compound have the above phase proportions, with the wet pulverization method, the average particle diameter of any primary particles can be easily set in the range of 0.1 µm to 10.0 µm, and the average particle diameter of the primary particles constituting the Si-containing granulated body can be set in the range of 0.1 µm to 10.0 µm.

Note that, in the production of the present negative electrode material powder, instead of the method of pulverizing the Si alloy particles 10 including the three phases therein, it is also possible to use a method in which Si particles, SiX compound particles, and SnY compound particles are separately formed directly from respective molten metals, these particles are pulverized to a predetermined particle diameter and then mixed.

Next, a binder is added to a slurry including the primary particles obtained as described above, if necessary. Examples of the binder include polyvinylidene fluoride (PVdF), polyvinyl alcohol (PVA), polyvinyl butyral (PVB), sodium polyacrylate (PAANa), and ammonium polyacrylate (PAANH₃).

Thereafter, the granulated body 2 is obtained by using a spray drying method. Specifically, the slurry after the adjustment is supplied to a spray drying device while being stirred, and sprayed from a tip of a nozzle of the spray drying device. Then, a solvent 11 is evaporated (dried) in a fine liquid droplet 12 (see (C) of FIG. 3) which is a spray flow, to thereby obtain the Si-containing granulated body 2 as illustrated in (D) of FIG. 3.

### 2. Battery

Next, a battery formed by using a negative electrode including the present negative electrode material powder is described.

The negative electrode includes a conductive substrate and a conductive film laminated on a surface of the conductive substrate. The conductive film includes at least the present negative electrode material powder described above in a binder. The conductive film may also include a conductive aid, if necessary. In the case where a conductive aid is included, it is easier to ensure a conductive path for electrons.

In addition, the conductive film may include an aggregate, if necessary. In the case where an aggregate is included, expansion and contraction of the negative electrode during charging and discharging can be easily prevented, and collapse of the negative electrode can be prevented, so that the cycle characteristics can be further improved.

The conductive substrate functions as a current collector. Examples of a material thereof include Cu, a Cu alloy, Ni, a Ni alloy, Fe, and a Fe-based alloy. Preferably, it is Cu or a Cu alloy. Examples of a specific form of the conductive substrate include a foil form and a plate form. A foil form is preferred from the viewpoint of reducing the volume of the battery and improving the degree of freedom in form.

As a material of the above binder, for example, a polyvinylidene fluoride (PVdF) resin, a fluorine resin such as polytetrafluoroethylene, a polyvinyl alcohol resin, a polyimide resin, a polyamide resin, a polyamideimide resin, a styrene-butadiene rubber (SBR), or polyacrylic acid can be suitably used. These may be used alone or in combination of two or more thereof. Among these, a polyimide resin is particularly preferred since it has high mechanical strength, can withstand volume expansion of the active material, and effectively prevents the conductive film from peeling off from the current collector due to breakage of the binder.

Examples of the conductive aid include carbon black such as Ketjen black, acetylene black, and furnace black, graphite, carbon nanotubes, and fullerene. These may be used alone or in combination of two or more thereof. Among these, preferably, Ketjen black, acetylene black, or the like can be suitably used from the viewpoint of being easy to ensure electron conductivity.

From the viewpoint of conductivity improvement, electrode capacity, and the like, the content of the conductive aid is in a range of preferably 0 parts by mass to 30 parts by mass, and more preferably 4 parts by mass to 13 parts by mass, with respect to 100 parts by mass of the present negative electrode material powder. In addition, the average particle diameter (d50) of the conductive aid is preferably 10 nm to 1 µm, and more preferably 20 nm to 50 nm, from the viewpoint of dispersibility, ease of handling, and the like.

As the aggregate, a material that does not expand or contract during charging and discharging, or that has very little expansion or contraction can be suitably used. Examples thereof include graphite, alumina, calcia, zirconia, and activated carbon. These may be used alone or in combination of two or more thereof. Among these, preferably, graphite or the like can be suitably used from the viewpoint of conductivity, Li activity, and the like.

From the viewpoint of improving the cycle characteristics, the content of the aggregate is in a range of preferably 10 parts by mass to 400 parts by mass, and more preferably 43 parts by mass to 100 parts by mass, with respect to 100 parts by mass of the present negative electrode material powder. In addition, the average particle diameter of the aggregate is preferably 10 µm to 50 µm, and more preferably 20 µm to 30 µm, from the viewpoint of functionality as an aggregate, control of an electrode film thickness, and the like. Note that, the average particle diameter of the above aggregate is a value measured using a laser diffraction/scattering particle diameter distribution analyzer.

The present negative electrode can be produced by, for example, adding necessary amounts of the present negative electrode material powder, and, if necessary, a conductive aid and an aggregate to a binder dissolved in an appropriate solvent to form a paste, applying the paste to a surface of the conductive substrate, followed by drying, and optionally subjecting it to densification, a heat treatment, or the like.

In the case of forming a lithium ion battery using the present negative electrode, there are no particular limitations on a positive electrode, an electrolyte, a separator, and the like, which are basic components of the battery other than the present negative electrode.

Specific examples of the positive electrode include those in which a layer including a positive electrode active material such as LiCoO₂, LiNiO₂, LiFePO₄, and LiMnO₂ is formed on a surface of a current collector such as an aluminum foil.

Specific examples of the electrolyte include an electrolytic solution in which a lithium salt is dissolved in a non-aqueous solvent. In addition, it is also possible to use a polymer in which a lithium salt is dissolved, a polymer solid electrolyte in which a polymer is impregnated with the above electrolytic solution, and the like.

Specific examples of the non-aqueous solvent include ethylene carbonate, propylene carbonate, butylene carbonate, dimethyl carbonate, diethyl carbonate, and methyl ethyl carbonate. These may be used alone or in combination of two or more thereof.

Specific examples of the lithium salt include LiPF₆, LiBF₄, LiClO₄, LiCF₃SO₃, and LiAsF₆. These may be used alone or in combination of two or more thereof.

Other battery components include a separator, a can (battery case), and a gasket. As for these, as long as they are commonly used in a lithium ion battery, any of them can be appropriately combined to form a battery.

Note that, the shape of the battery is not particularly limited, and may be any shape such as a cylindrical shape, a rectangular shape, or a coin shape, and can be appropriately selected according to a specific application.

### [Examples]

Hereinafter, the present invention is described more specifically using Examples. Note that, "%" in the alloy composition is "mass%" unless otherwise specified.

### 1. Preparation of Negative Electrode Material Powder

Table 1 below shows alloy compositions of negative electrode material powders, 26 types thereof for Examples and 4 types thereof for Comparative Examples. Respective alloy compositions shown in Table 1 are defined so as to obtain target compositions shown in Tables 2 and 3 below.

First, each raw material shown in Table 1 was weighed out. The weighed raw materials were heated and melted by using a high frequency induction furnace to obtain molten alloys. Si alloy particles in the form of a powder were prepared from the molten alloys by using a gas atomization method. Note that, an argon atmosphere was used as an atmosphere during the preparation of the molten alloys and the gas atomization. In addition, during the gas atomization, a high-pressure (4 MPa) argon gas was sprayed onto the molten alloy falling like a rod in the atomization chamber. The obtained Si alloy particles were finely pulverized with a wet process (wet solvent: ethanol) using a bead mill, a slurry including primary particles was obtained, a predetermined amount of PVB as a binder was added as shown in Tables 2 and 3, and then a Si-containing granulated body was prepared as a negative electrode material powder using a spray drying method.

**[Table 1]**

| | | Chemical composition (mass%) | | | | | | | |
|---|---|---|---|---|---|---|---|---|---|
| | | Si | Fe | Sn | Cu | Cr | Zr | Ni | Ti |
| Example | 1 | 94.00 | 1.00 | 3.05 | 1.96 | - | - | - | - |
| | 2 | 52.67 | 42.33 | 3.05 | 1.96 | - | - | - | - |
| | 3 | 57.65 | 37.35 | 3.05 | 1.96 | - | - | - | - |
| | 4 | 40.04 | 9.96 | 30.45 | 19.55 | - | - | - | - |
| | 5 | 94.00 | 1.00 | 3.05 | 1.96 | - | - | - | - |
| | 6 | 52.67 | 42.33 | 3.05 | 1.96 | - | - | - | - |
| | 7 | 57.65 | 37.35 | 3.05 | 1.96 | - | - | - | - |
| | 8 | 94.00 | 1.00 | 3.05 | 1.96 | - | - | - | - |
| | 9 | 52.67 | 42.33 | 3.05 | 1.96 | - | - | - | - |
| | 10 | 57.65 | 37.35 | 3.05 | 1.96 | - | - | - | - |
| | 11 | 40.04 | 9.96 | 30.45 | 19.55 | - | - | - | - |
| | 12 | 77.57 | 17.43 | 3.05 | 1.96 | - | - | - | - |
| | 13 | 77.57 | 17.43 | 3.05 | 1.96 | - | - | - | - |
| | 14 | 77.57 | 17.43 | 3.05 | 1.96 | - | - | - | - |
| | 15 | 95.00 | 7.47 | 3.05 | 1.96 | - | - | - | - |
| | 16 | 62.63 | 32.37 | 3.05 | 1.96 | - | - | - | - |
| | 17 | 67.61 | 27.39 | 3.05 | 1.96 | - | - | - | - |
| | 18 | 72.59 | 22.41 | 3.05 | 1.96 | - | - | - | - |
| | 19 | 77.60 | - | 3.65 | 1.96 | 16.80 | - | - | - |
| | 20 | 73.34 | - | 3.05 | 1.96 | - | 21.67 | - | - |
| | 21 | 77.12 | - | 3.05 | 1.96 | - | - | 17.89 | - |
| | 22 | 93.37 | - | 3.05 | 1.96 | - | - | - | 1.63 |
| | 23 | 60.04 | 9.96 | 18.27 | 11.73 | - | - | - | - |
| | 24 | 80.04 | 9.96 | 6.09 | 3.91 | - | - | - | - |
| | 25 | 89.04 | 9.96 | 0.61 | 0.39 | - | - | - | - |
| | 26 | 89.94 | 9.96 | 0.06 | 0.04 | - | - | - | - |
| Comparative Example | 1 | 77.57 | 17.43 | 3.05 | 1.96 | - | - | - | - |
| | 2 | 77.57 | 17.43 | 3.05 | 1.96 | - | - | - | - |
| | 3 | 77.57 | 17.43 | 3.05 | 1.96 | - | - | - | - |
| | 4 | 77.57 | 17.43 | 3.05 | 1.96 | - | - | - | - |

### 2. Preparation of Coin-type Battery for Charging and Discharging Test

Blended were 100 parts by mass of the prepared negative electrode material powder as a negative electrode active material, 6 parts by mass of Ketjen black (manufactured by Lion Corporation) as a conductive aid, and 19 parts by mass of a polyimide (thermoplastic resin) binder as a binding agent, and therewith was mixed N-methyl-2-pyrrolidone (NMP) as a solvent, to thereby prepare each paste including each negative electrode material powder.

Each coin-type half cell was prepared as follows. Here, for sake of simple evaluation, an electrode prepared by using a negative electrode material powder was used as a test electrode, and a Li foil was used as a counter electrode. First, each paste was applied to a surface of a SUS316L foil (thickness: 20 µm) as a negative electrode current collector using a doctor blade method so as to have a thickness of 50 µm, followed by drying to form each negative electrode active material layer. After formation, the negative electrode active material layer was densified by roll pressing. Accordingly, test electrodes according to Examples and Comparative Examples were prepared.

Next, each of the test electrodes according to Examples and Comparative Examples was punched into a disc shape having a diameter of 11 mm to obtain a test electrode.

Next, a Li foil (thickness: 500 µm) was punched into substantially the same shape as the test electrode to prepare a counter electrode. In addition, a non-aqueous electrolytic solution was prepared by dissolving LiPF₆ at a concentration of 1 mol/l in an equivalent mixed solvent of ethylene carbonate (EC) and diethyl carbonate (DEC).

Next, the test electrode was housed in a positive electrode can, and the counter electrode was housed in a negative electrode can, and a separator made of a polyolefin-based microporous film was disposed between the test electrode and the counter electrode. Note that, the test electrode should be a negative electrode in a lithium ion battery, but in the case where a Li foil is used as the counter electrode, the Li foil is the negative electrode and the test electrode is the positive electrode.

Next, the above non-aqueous electrolytic solution was injected into both cans, and the negative electrode can and the positive electrode can were crimped and fixed to each other.

### 3. Evaluation on Negative Electrode Material Powder

### 3-1. Checking of Composition Phase of Negative Electrode Material Powder

The negative electrode material powder prepared in each of Examples and Comparative Examples was analyzed by XRD (X-ray diffraction) to check whether a Si phase, a SiX compound phase, and a SnY compound phase were included. Note that, for the XRD analysis, a Co tube was used and an angle range of 120° to 20° was measured.

### 3-2. Calculation of Proportions of Si Phase, SiX Compound Phase, and SnY Compound Phase

A method for calculating the proportions of the Si phase, the SiX compound phase, and the SnY compound phase shown in Tables 2 and 3 below is described with reference to Example 14 as an example.
(1) First, the composition phases in the prepared negative electrode material powder are confirmed. In the case of Example 14, as a result of the XRD analysis, Si, Si₂Fe, and Sn₅Cu₆ were found.
(2) Si₂Fe is 50.1 [Si]-49.9[Fe] in terms of proportion in mass%. Correspondingly, the amount of Si to be compound is 17.43 × 50.1/49.9 = 17.50%. Therefore, the proportion of the SiX compound phase (Si₂Fe) is the total of the amount of Si to be compound (17.50%) and the amount of Fe (17.43%) in Table 1, and is thus 35% in this example.
(3) The proportion of the Si phase is a value obtained by subtracting the amount of Si to be compound (17.50%) from the total amount of Si (77.57%) in Table 1, and is thus 60% in this example.
(4) The proportion of the SnY compound phase is the total of the amount of Sn (3.05%) and the amount of Cu (1.96%) in Table 1, and is thus 5% in this example.

**[Table 2]**

| | | Target composition phase | Type of SiX phase | Phase proportion (mass%) | | | d50 (primary) (µm) | d50 (granulated) (µm) | 1/200*d50 (granulated) | 1/3*d50 (granulated) | Amount of binder (mass%) |
|---|---|---|---|---|---|---|---|---|---|---|---|
| | | | | Si | SiX | SnY | | | | | |
| Example | 1 | 93[Si]-2[Si₂Fe]-5 [Sn₅Cu₆] | Si₂Fe | 93 | 2 | 5 | 0.15 | 19.00 | 0.10 | 6.33 | 1.5 |
| | 2 | 10[Si]-85[Si₂Fe]-5[Sn₅Cu₆] | Si₂Fe | 10 | 85 | 5 | 0.16 | 17.23 | 0.09 | 5.74 | 1.5 |
| | 3 | 20[Si]-75[Si₂Fe]-5[Sn₅Cu₆] | Si₂Fe | 20 | 75 | 5 | 0.17 | 19.30 | 0.10 | 6.43 | 1.5 |
| | 4 | 30[Si]-20[Si₂Fe]-50[Sn₅Cu₆] | Si₂Fe | 30 | 20 | 50 | 0.13 | 14.69 | 0.07 | 4.90 | 1.5 |
| | 5 | 93[Si]-2[Si₂Fe]-5[Sn₅Cu₆] | Si₂Fe | 93 | 2 | 5 | 4.48 | 31.53 | 0.16 | 10.51 | 0.5 |
| | 6 | 10[Si]-85[Si₂Fe]-5[Sn₅Cu₆] | Si₂Fe | 10 | 85 | 5 | 4.26 | 44.33 | 0.22 | 14.78 | 0.5 |
| | 7 | 20[Si]-75[Si₂Fe]-5[Sn₅Cu₆] | Si₂Fe | 20 | 75 | 5 | 4.19 | 40.74 | 0.20 | 13.58 | 0.5 |
| | 8 | 93[Si]-3[Si₂Fe]-5[Sn₅Cu₆] | Si₂Fe | 93 | 2 | 5 | 4.83 | 48.19 | 0.24 | 16.06 | 0.0 |
| | 9 | 10[Si]-85[Si₂Fe]-5[Sn₅Cu₆] | Si₂Fe | 10 | 85 | 5 | 4.71 | 47.14 | 0.24 | 15.71 | 0.0 |
| | 10 | 20[Si]-75[Si₂Fe]-5[Sn₅Cu₆] | Si₂Fe | 20 | 75 | 5 | 4.66 | 34.39 | 0.17 | 11.46 | 0.0 |
| | 11 | 30[Si]-20[Si₂Fe]-50[Sn₅Cu₆] | Si₂Fe | 30 | 20 | 50 | 4.19 | 40.99 | 0.20 | 13.66 | 0.5 |
| | 12 | 60[Si]-35[Si₂Fe]-5[Sn₅Cu₆] | Si₂Fe | 60 | 35 | 5 | 0.15 | 24.40 | 0.12 | 8.13 | 1.5 |
| | 13 | 60[Si]-35[Si₂Fe]-5[Sn₅Cu₆] | Si₂Fe | 60 | 35 | 5 | 4.16 | 42.23 | 0.21 | 14.08 | 0.5 |
| | 14 | 60[Si]-35[Si₂Fe]-5[Sn₅Cu₆] | Si₂Fe | 60 | 35 | 5 | 1.01 | 44.90 | 0.22 | 14.97 | 1.0 |
| | 15 | 80[Si]-15[Si₂Fe]-5[Sn₅Cu₆] | Si₂Fe | 80 | 15 | 5 | 3.89 | 19.53 | 0.10 | 6.51 | 1.0 |
| | 16 | 30[Si]-65[Si₂Fe]-5[Sn₅Cu₆] | Si₂Fe | 30 | 65 | 5 | 0.81 | 41.82 | 0.21 | 13.94 | 1.0 |
| | 17 | 40[Si]-55[Si₂Fe]-5[Sn₅Cu₆] | Si₂Fe | 40 | 55 | 5 | 3.03 | 25.60 | 0.13 | 8.53 | 1.0 |
| | 18 | 50[Si]-45[Si₂Fe]-5[Sn₅Cu₆] | Si₂Fe | 50 | 45 | 5 | 1.41 | 25.46 | 0.13 | 8.49 | 1.0 |
| | 19 | 60[Si]-35[Si₂Cr]-5[Sn₅Cu₆] | Si₂Cr | 60 | 35 | 5 | 2.58 | 32.53 | 0.16 | 10.84 | 1.0 |
| | 20 | 60[Si]-35[Si₂Zr]-5[Sn₅Cu₆] | Si₂Zr | 60 | 35 | 5 | 0.79 | 22.88 | 0.11 | 7.63 | 1.0 |

**[Table 2] (continued)**

| | | Initial Coulombic efficiency | Initial discharge capacity | Cycle characteristics | Comprehensive determination |
|---|---|---|---|---|---|
| Example | 1 | B | B | B | Passed |
| | 2 | C | C | A | Passed |
| | 3 | C | C | A | Passed |
| | 4 | B | C | B | Passed |
| | 5 | A | A | C | Passed |
| | 6 | C | B | B | Passed |
| | 7 | C | B | B | Passed |
| | 8 | A | A | C | Passed |
| | 9 | C | B | C | Passed |
| | 10 | C | B | C | Passed |
| | 11 | A | B | C | Passed |
| | 12 | B | B | A | Passed |
| | 13 | A | A | B | Passed |
| | 14 | A | A | A | Passed |
| | 15 | A | A | A | Passed |
| | 16 | A | A | A | Passed |
| | 17 | A | A | A | Passed |
| | 18 | A | A | A | Passed |
| | 19 | A | A | A | Passed |
| | 20 | A | A | A | Passed |

**[Table 3]**

| | | Target composition phase | Type of SiX phase | Phase proportion (mass%) | | | d50 (primary) (µm) | d50 (granulated) (µm) | 1/200*d50 (granulated) | 1/3*d50 (granulated) | Amount of binder (mass%) |
|---|---|---|---|---|---|---|---|---|---|---|---|
| | | | | Si | SiX | SnY | | | | | |
| Example | 21 | 60[Si]-35[Si₂Ni]-5[Sn₅Cu₆] | Si₂Ni | 60 | 35 | 5 | 3.75 | 46.35 | 0.23 | 15.45 | 1.0 |
| | 22 | 60[Si]-35[Si₂Ti]-5[Sn₅Cu₆] | Si₂Ti | 60 | 35 | 5 | 1.50 | 19.84 | 0.10 | 6.61 | 1.0 |
| | 23 | 50[Si]-20[Si₂Fe]-30[Sn₅Cu₆] | Si₂Fe | 50 | 20 | 30 | 0.79 | 24.72 | 0.12 | 8.24 | 1.0 |
| | 24 | 70[Si]-20[Si₂Fe]-10[Sn₅Cu₆] | Si₂Fe | 70 | 20 | 10 | 2.60 | 36.50 | 0.18 | 12.17 | 1.0 |
| | 25 | 79[Si]-20[Si₂Fe]-2[Sn₅Cu₆] | Si₂Fe | 79 | 20 | 1 | 1.29 | 43.99 | 0.22 | 14.66 | 1.0 |
| | 26 | 79.9[Si]-20[Si₂Fe]-0.1[Sn₅Cu₆] | Si₂Fe | 79.9 | 20 | 0.1 | 0.74 | 49.13 | 0.25 | 16.38 | 1.0 |
| Comparative Example | 1 | 60[Si]-35[Si₂Fe]-5[Sn₅Cu₆] | Si₂Fe | 60 | 35 | 5 | 0.08 | 47.77 | 0.24 | 15.92 | 1.0 |
| | 2 | 60[Si]-35[Si₂Fe]-5[Sn₅Cu₆] | Si₂Fe | 60 | 35 | 5 | 0.08 | 45.64 | 0.23 | 15.21 | 5.0 |
| | 3 | 60[Si]-35[Si₂Fe]-5[Sn₅Cu₆] | Si₂Fe | 60 | 35 | 5 | 12.02 | 43.76 | 0.22 | 14.59 | 1.0 |
| | 4 | 60[Si]-35[Si₂Fe]-5[Sn₅Cu₆] | Si₂Fe | 60 | 35 | 5 | 5.36 | 10.72 | 0.05 | 3.57 | 1.0 |

**[Table 3] (continued)**

| | | Initial Coulombic efficiency | Initial discharge capacity | Cycle characteristics | Comprehensive determination |
|---|---|---|---|---|---|
| Example | 21 | A | A | A | Passed |
| | 22 | A | A | A | Passed |
| | 23 | A | A | A | Passed |
| | 24 | A | A | A | Passed |
| | 25 | A | A | A | Passed |
| | 26 | A | A | A | Passed |
| Comparative Example | 1 | D | A | A | Failed |
| | 2 | A | D | A | Failed |
| | 3 | A | A | D | Failed |
| | 4 | A | D | A | Failed |

### 3-3. Measurement of Average Particle Diameter of Primary Particles

The particle diameter of the primary particles in the slurry after the wet pulverization was measured using a particle diameter distribution analyzer (trade name: MICROTRAC MT3000, manufactured by Nikkiso Co., Ltd.), and the diameter of a sphere having a volume same as that of the particles having a median value (median diameter, a particle diameter corresponding to 50% of the cumulative curve) in a cumulative curve of the particle diameter distribution expressed on a volume basis was defined as the average particle diameter (d50). The results are shown in Tables 2 and 3.

### 3-4. Measurement of Average Particle Diameter of Si-containing Granulated Body

The particle diameter of the obtained Si-containing granulated body was measured using a particle image analyzer "Morphologi G3" (Malvern Panalytical Ltd). The diameter (circle area equivalent diameter) of an ideal circle (perfect circle) having an area equal to the projected area of the granulated body image was calculated as the particle diameter of each granulated body, and the median value in the cumulative curve of the particle diameter distribution was defined as the average particle diameter (d50). The results are shown in Tables 2 and 3. Note that, in Tables 2 and 3, values of 1/3 times and 1/200 times the average particle diameter of the granulated body are also shown.

### 3-5. Charging and Discharging Test

One cycle including constant current charging and discharging at a current value of 0.2 mA was performed by using the prepared coin-type battery. The initial discharge capacity C₀ (mAh/g) was calculated based on the value obtained by dividing the capacity (mAh) used for releasing Li by the amount (g) of the active material. In addition, the proportion of the discharge capacity to the charge capacity in the above charging and discharging cycle was evaluated as a percentage of discharge capacity/charge capacity, and was defined as the initial Coulombic efficiency (%).

Regarding determination on the initial discharge capacity (mAh/g), the case of more than 400 and 500 or less was evaluated as "A", the case of more than 350 and 400 or less was evaluated as "B", the case of more than 250 and 350 or less was evaluated as "C", and the case of 250 or less was evaluated as "D". The results are shown in Tables 2 and 3.

Regarding determination on the initial Coulombic efficiency, the case of more than 95% was evaluated as "A", the case of more than 80% and 95% or less was evaluated as "B", the case of more than 60% and 80% or less was evaluated as "C", and the case of 60% or less was evaluated as "D". The results are shown in Tables 2 and 3.

After the second cycle of the charging and discharging test, the charging and discharging test was performed at a 1/5C rate (C rate: the current value for charging/discharging an amount of electricity C₀ required to charge/discharge the electrode in 1 hour is defined as 1C. For example, 5C means charging/discharging in 12 minutes, and 1/5C means charging/discharging in 5 hours). Then, the cycle characteristics were evaluated by performing the above charging and discharging cycle 100 times. A capacity retention rate (%) (discharge capacity after 100 cycles/initial discharge capacity (discharge capacity at first cycle) × 100) was obtained from each of the obtained discharge capacities. Regarding determination on the capacity retention rate, the case of more than 70% was evaluated as "A", the case of more than 50% and 70% or less was evaluated as "B", the case of more than 30% and 50% or less was evaluated as "C", and the case of 30% or less was evaluated as "D". The results are shown in Tables 2 and 3.

In addition, the comprehensive determination shown in Tables 2 and 3 is based on the evaluation results of the initial Coulombic efficiency, the initial discharge capacity, and the cycle characteristics. Specifically, for each of Examples and Comparative Examples, the case where there was no evaluation of "D" in the above three types of characteristic evaluation was defined as "Passed", and the case where there was evaluation of "D" in any of the above three types of characteristic evaluation was defined as "Failed".

The results in Tables 2 and 3 obtained as described above show the followings.

Comparative Example 1 is an example in which the average particle diameter of the primary particles is smaller than the lower limit (0.1 µm), and the evaluation of the initial Coulombic efficiency is "D".

Comparative Example 2 is an example in which the content of the binder is more than the upper limit (2.0%) due to a small average particle diameter of the primary particles, and the evaluation of the initial discharge capacity is "D".

Comparative Example 3 is an example in which the average particle diameter of the primary particles is larger than the upper limit (10.0 µm), and the evaluation of the cycle characteristics is "D".

Comparative Example 4 is an example in which the average particle diameter (d50) of the primary particles is larger than 1/3 of the average particle diameter (d50) of the Si-containing granulated body (the particle diameter of the Si-containing granulated body is relatively small), and the evaluation of the initial discharge capacity is "D".

As described above, in all Comparative Examples, although a negative electrode material including a Si-containing granulated body is used, the initial Coulombic efficiency, the initial discharge capacity, or the cycle characteristics is evaluated as D, and the battery characteristics in consideration of the initial characteristics and the cycle characteristics have not been sufficiently improved.

In contrast, in Examples in which the negative electrode material powder includes a Si-containing granulated body formed by aggregating primary particles of a Si phase, a Si compound phase, and a Sn compound phase and including a binder in the range of 0 mass% to 2.0 mass%, the primary particles constituting the Si-containing granulated body have an average particle diameter (d50) in the range of 0.1 µm to 10.0 µm, and the average particle diameter (d50) of the primary particles is smaller than 1/3 of the average particle diameter (d50) of the Si-containing granulated body and is larger than 1/200 of the average particle diameter (d50) of the Si-containing granulated body, the battery characteristics in consideration of the initial Coulombic efficiency, the initial discharge capacity, and the cycle characteristics have been improved.

It can be particularly seen that, in Examples 14 to 26 in which the proportion a of the Si phase is set to 29.9 ≤ a ≤ 90, the proportion b of the SiX compound phase is set to 1 ≤ b ≤ 70, the c of the SnY compound phase is set to 0.1 ≤ c ≤ 30, and the average particle diameter of the primary particles is set to the range of 0.2 µm to 4.0 µm, the characteristics are well balanced.

Focusing on the amount of the binder, a decrease in cycle characteristics is observed in the example in which no binder is added (Examples 8 to 10). It can be seen that in order to improve the cycle characteristics, it is preferable to add a small amount of binder (within a range of more than 0% and 2.0% or less).

Although the negative electrode material powder for lithium ion battery and the lithium ion battery according to the present invention have been described in detail above, the present invention is not limited to the above-described embodiment and Examples. For example, the negative electrode material powder according to the present invention can include a Si-containing granulated body including, as primary particles, particles having two or three phases in the Si phase, the SiX compound phase, and the SnY compound phase, and various modifications can be made without departing from the gist of the present invention.

The present application is based on Japanese patent application No. 2022-174683 filed on October 31, 2022, and the contents thereof are incorporated herein as reference.

## Claims

1. A negative electrode material powder for lithium ion battery, comprising:
a Si phase;
a Si compound phase; and
a Sn compound phase,
wherein the negative electrode material powder comprises a Si-containing granulated body,
the Si-containing granulated body is formed by aggregating primary particles of the Si phase, the Si compound phase, and the Sn compound phase, and optionally comprises a binder in a range of 0 mass% to 2.0 mass%,
the primary particles constituting the Si-containing granulated body have an average particle diameter (d50) in a range of 0.1 µm to 10.0 µm,
the average particle diameter (d50) of the primary particles is smaller than 1/3 of an average particle diameter (d50) of the Si-containing granulated body, and
the average particle diameter (d50) of the primary particles is larger than 1/200 of the average particle diameter (d50) of the Si-containing granulated body.

2. The negative electrode material powder for lithium ion battery according to claim 1, wherein
the Si compound phase is a SiX compound phase comprising Si and an element X,
the Sn compound phase is a SnY compound phase comprising Sn and an element Y,
the element X is at least one element selected from the group consisting of Fe, Ni, Cr, Zr, and Ti,
the element Y is at least one element selected from the group consisting of Cu, Fe, Ni, Cr, Co, Mn, Zr, and Ti, and
when content proportions of the Si phase, the SiX compound phase, and the SnY compound phase are represented by the following formula (1), a, b, and c satisfy a+b+c = 100, 9.9 ≤ a ≤ 95, 1 ≤ b ≤ 90, and 0.1 ≤ c ≤ 50,
a[Si]-b[SiX]-c[SnY] formula (1)
in the formula (1), a, b, and c respectively represent a content proportion (mass%) of the Si phase, the SiX compound phase, and the SnY compound phase.

3. The negative electrode material powder for lithium ion battery according to claim 2, wherein a, b, and c in the formula (1) satisfy 29.9 ≤ a ≤ 90, 1 ≤ b ≤ 70, and 0.1 ≤ c ≤ 30, respectively.

4. The negative electrode material powder for lithium ion battery according to claim 2, wherein
the element Y is Cu, and
the primary particles have the average particle diameter (d50) in a range of 0.2 µm to 5.0 µm.
